# EUROPEAN PATENT APPLICATION

(11) **EP 4 398 162 A1**
(43) Date of publication of application: **10.07.2024**
(21) Application number: 24150172.5
(22) Date of filing: 03.01.2024
(51) Int. Cl.: G06Q 10/02, G08G 5/00

(54) **SYSTEMS AND METHODS FOR SCHEDULING FLIGHTS OF AIRCRAFT**

(30) Priority: 05.01.2023 US 202318150236
(71) Applicant: The Boeing Company, Arlington, VA 22202 (US)
(72) Inventor: GRÖNKVIST, Åke Mattias, Arlington 22202 (US); KJERRSTRÖM, Jens Arne Ivan, Arlington 22202 (US); ALMQVIST, Viktor Anders, Arlington 22202 (US); WESTERLUND, Karl Erik Andreas, Arlington 22202 (US); NORDÉN, Nora Eliza, Arlington 22202 (US)
(74) Representative: Boult Wade Tennant LLP

(57) **Abstract**

A system and a method include a scheduling control unit configured to determine one or more retiming options for one or more tail assignments of one or more aircraft scheduled for flights according to an original schedule. The one or more retiming options include one or more retiming times that differ from one or more original times of the one or more tail assignments within the original schedule. The scheduling control unit can select the one or more retiming options, and revise the original schedule based on the one or more retiming options as selected.

## Description

### FIELD OF THE DISCLOSURE

Examples of the present disclosure generally relate to systems and methods for scheduling flights of aircraft, and more particularly to systems and methods for retiming flights.

### BACKGROUND OF THE DISCLOSURE

Aircraft are used to transport passengers and cargo between various locations. Numerous aircraft depart from and arrive at a typical airport every day.

Each aircraft has a specific tail number, which provides a unique identification for the aircraft. The aircraft typically travel according to various planned flights, such as in a day, week, month, etc. Each flight has a specific flight number. An aircraft tail assignment combines a tail number for an aircraft with a particular flight number. Each flight of an aircraft typically has a different tail assignment. For example, a flight from New York to Chicago has a tail assignment that includes the tail number for the aircraft with a flight number associated with the trip from New York to Chicago. A flight of the aircraft from Chicago to Seattle has the same tail number, but a different flight number. An aircraft operator provides a schedule for all flights of all aircraft.

Typically, flights within a schedule are considered fixed in time in relation to departure and arrival times. As can be appreciated, a schedule of flights in a time period (such as a day, a week, a month, or longer) includes numerous flights for each aircraft. For example, an aircraft has a first tail assignment in relation to a first flight from a first airport to a second airport, and a second tail assignment in relation to a second flight from the second airport to a third airport. Moreover, passengers onboard one flight may connect to one or more additional flights. As such, connecting flights can be scheduled based on one or more preceding flights.

However, because so many flights within a schedule are co-dependent on one another, it is difficult to determine if revisions to a schedule result in an improvement or not.

### SUMMARY OF THE DISCLOSURE

A need exists for a system and a method for revising a schedule of flight times of aircraft.

With those needs in mind, certain examples of the present disclosure provide a system including a scheduling control unit configured to determine one or more retiming options for one or more tail assignments of one or more aircraft scheduled for flights according to an original schedule. The one or more retiming options include one or more retiming times that differ from one or more original times of the one or more tail assignments within the original schedule.

In at least one example, the scheduling control unit is further configured to select the one or more retiming options, and revise the original schedule based on the one or more retiming options as selected. For example, the scheduling control unit is configured to select the one or more retiming options based on one or more connecting flights of one or more connecting passengers. For example, the scheduling control unit is configured to select the one or more retiming options based on a reduction in one or more metrics in relation to the original schedule and, optionally, wherein the one or more metrics include fuel usage.

The system can also include a schedule database that stores the original schedule. The scheduling control unit is in communication with the schedule database.

The system can also include a user interface having a display. The scheduling control unit shows one or more of the original schedule, the one or more retiming options, or a revised schedule based on the one or more retiming options on the display.

The one or more tail assignments include one or more tail numbers associated with one or more flight numbers.

In at least one example, the one or more retiming options include a plurality of retiming options. In at least one example, the scheduling control unit discards one or more of the plurality of retiming options that undesirably affect one or more subsequent flights. In at least one example, the scheduling control unit assigns a different aircraft to one or more of the plurality of retiming options in response to an original aircraft being unavailable for the one or more of the plurality of retiming options.

In at least one example the scheduling control unit is an artificial intelligence or machine learning system.

Certain examples of the present disclosure provide a method including determining, by a scheduling control unit, one or more retiming options for one or more tail assignments of one or more aircraft scheduled for flights according to an original schedule, wherein the one or more retiming options include one or more retiming times that differ from one or more original times of the one or more tail assignments within the original schedule.

Certain examples of the present disclosure provide a non-transitory computer-readable storage medium comprising executable instructions that, in response to execution, cause one or more control units comprising a processor, to perform operations comprising: determining one or more retiming options for one or more tail assignments of one or more aircraft scheduled for flights according to an original schedule, wherein the one or more retiming options include one or more retiming times that differ from one or more original times of the one or more tail assignments within the original schedule; selecting the one or more retiming options; and revising the original schedule based on the one or more retiming options as selected.

### BRIEF DESCRIPTION OF THE DRAWINGS

Figure 1 illustrates a schematic block diagram of a system for scheduling flights of aircraftz.
Figure 2 illustrates a simplified block diagram of tail assignments and retiming options.
Figure 3 illustrates a flow chart of a method for scheduling flights of aircraft.
Figure 4 illustrates a schematic block diagram of a scheduling control unit.
Figure 5 illustrates a perspective front view of an aircraft.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the present disclosure provide a system and a method for scheduling flights of numerous aircraft. The system and method are configured to re-time flight departures and arrivals. The systems and methods can model re-fleeting of aircraft (that is, the mix of fleet types), and allow flights to change fleets from those originally planned. Such retiming with re-fleeting allows for connection possibilities between flights which were previously planned for different fleets, and hence not synchronized in time. Synchronizing retiming with crew planning can yield benefits, for example by making more efficient use of crew operating aircraft which eases the workload management of the crew leading to safer operation of aircraft.

The systems and methods are configured to re-time flight times in relation to tail assignments for aircraft. In at least one example, the systems and methods are configured to retime tail assignments by creating discretely retimed copies of flights that can be selected. In a connection network of flights, flight copies can be generated. The number of copies, and the amount by which they are retimed, affects which connections are possible between flights. In addition to the flight copies, the tail assignments are also adjusted to include constraints ensuring that only one copy of each flight is selected.

In at least one example, retiming of flights can provide routing possibilities which would otherwise not be possible, and hence can ensure passengers can reach their destinations which would otherwise not be possible. Further, retiming can also make it possible to capture more passengers on each flight, again ensuring more passengers can reach their destination. Also, retiming can also make it possible to reduce fuel usage thereby lessening the environmental impact of the flights. In at least one example, retimings are adjustments to an existing schedule, such as a between 5-20 minutes, rather than hours. Optionally, the retimings can be greater than 20 minutes.

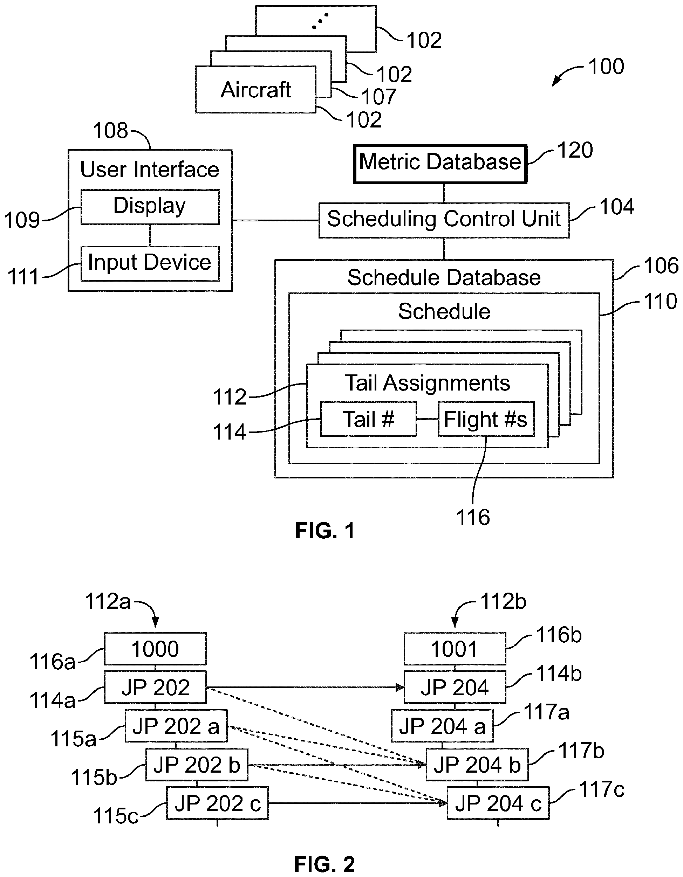

Figure 1 illustrates a schematic block diagram of a system 100 for scheduling flights of aircraft 102, according to an example of the present disclosure. The system 100 includes a scheduling control unit 104 in communication with a schedule database 106, such as through one or more wired or wireless connections. The scheduling control unit 104 can also be in communication with a user interface 108, such as through one or more wired or wireless connections. In at least one example, the scheduling control unit 104, the schedule database 106, and the user interface 108 are co-located, such as at a central monitoring location. Optionally, the scheduling control unit 104, the schedule database 106, and/or the user interface 108 can be remotely located from one another, and in communication through communication networks, such as private networks, the Internet, and/or the like. In at least one example, one or more user interfaces can be onboard one or more of the aircraft 102.

In at least one example, the user interface 108 includes a display 109 and an input device 111, both of which can be in communication with the scheduling control unit 104, such as through one or more wired or wireless connections. The display 109 can be an electronic monitor, electronic screen, television, touchscreen, and/or the like. The input device 111 can include a keyboard, mouse, stylus, touchscreen interface (that is, the input device 111 can be integral with the display 109), and/or the like. The scheduling control unit 104 outputs signals to the user interface 108 that allow a schedule 110, and/or portions thereof, to be shown on the display 109. In at least one example, the scheduling control unit 104 shows one or more of an original schedule, one or more retiming options, and/or a revised schedule based on the one or more retiming options on the display 109.

As described herein, the scheduling control unit 104 determines various retiming options for the schedule 110, which can be shown on the display 109. In at least one example, an individual can select a retiming option, which then alters the schedule 110. In at least one other example, the scheduling control unit 104 automatically selects (without human intervention) a determined retiming option which thereby alters the schedule 110.

Numerous aircraft 102 are scheduled for flights according to the schedule 110 stored within the schedule database 106. The schedule 110 includes tail assignments 112 for each of the aircraft 102. Each aircraft 102 is associated with a plurality of tail assignments 112. The tail assignments 112 include a tail number 114 that identifies a particular aircraft and flight numbers 116 for the particular aircraft. For example, a tail assignment 112 for aircraft A123 for a flight between Chicago and New York can be A123 (tail number) - F3204 (flight number). A tail assignment for the same aircraft for a flight from New York to Fort Lauderdale can be A123-F1 111. The schedule 110 includes the various tail assignments for each aircraft 102 over a particular time period, such as a day, a week, a month, or longer.

In operation, the scheduling control unit 104 generates retiming options for tail assignments 112 within the schedule 110, as originally determined (that is, the original schedule 110). For example, the scheduling control unit 104 can generate two or more retiming options for a tail assignment 112. The retiming options differ from an originally scheduled tail assignment 112, as set forth in the schedule. In at least one example, the scheduling control unit 104 generates two, three, four, five, or more retiming options in relation to an originally scheduled tail assignment 112. Each retiming option differs in time (such as with respect to one or both of a departure time from a departure airport and/or an arrival time at an arrival airport) from another retiming option, and the originally scheduled tail assignment 112. For example, a retiming option can include a timing differential, which can be a predetermined difference in time, such as between two - ten minutes. As an example, an original tail assignment 112 includes a tail number 114 and a flight number 116 for a flight from a departure airport to an arrival airport. In at least one example, the scheduling control unit 104 determines retiming options that also include the tail number 114 and flight night number 116 from the original tail assignment 112. The table below shows an example of an original tail assignment 112 in relation to retiming options:

| **Tail assignment** | **Departure time** | **Arrival time** |
|---|---|---|
| Original | T1 | T2 |
| Retiming option 1 | T1 + 5 minutes | T2 + 5 minutes |
| Retiming option 2 | T1 + 10 minutes | T2 + 10 minutes |
| Retiming option 3 | T1 - 5 minutes | T2 - 5 minutes |

The above table is merely exemplary. The scheduling control unit 104 can determine more or less retiming options than shown. Additionally, the scheduling control unit 104 can determine time differences other than 5 minutes. In at least one example, an individual can decide which retiming options for a flight are possible, and the scheduling control unit 104 automatically selects one or more retiming options to create an optimized schedule. In at least one other example, the scheduling control unit 104 automatically determines the retiming options.

After the scheduling control unit 104 determines the retiming options, the scheduling control unit 104 analyzes the retiming options in relation to subsequent flights of the aircraft 102, as well as other aircraft 102, such as connecting flights of passengers within a first flight of the aircraft 102. In at least one example, the scheduling control unit 104 may discard a retiming option if it undesirably affects a subsequent flight. For example, the scheduling control unit 104 may discard a retiming option if it prevents the aircraft 102 from a subsequent flight (for example, a subsequent tail assignment 112 cannot be achieved, and/or delayed longer than a predetermined delay threshold, such as longer than one hour). As another example, if the retiming option prevents a particular aircraft 102 from flying a previously scheduled subsequent flight, the scheduling control unit 104 can assign a different aircraft 102 to that particular flight. That is, the scheduling control unit 104 can assign a different aircraft to a retiming option in response to an original aircraft being unavailable for the retiming option.

As another example, the scheduling control unit 104 is configured to select the one or more retiming options based on one or more connecting flights of one or more connecting passengers. For example, the scheduling control unit 104 analyzes a retiming option in relation to connecting flights for passengers for an original first flight (the retiming option being determined from the original first flight). The scheduling control unit 104 can base a retiming option on a connection threshold, which is a predetermined number of connecting passengers that are able to make a connecting flight in relation to the retiming option. The connection threshold can be 90% or more passengers able to make a connecting flight. Optionally, the connection threshold can be 100% of passengers able to make a connecting flight. As another example, the connection threshold can be less than 90% of passengers able to make a connecting flight.

In at least one example, the scheduling control unit 104 is configured to select a retiming options based on fuel reduction in relation to an original schedule 110 (that is, the retiming option provides a lower fuel usage in relation to the original schedule thereby providing environmental benefits). For example, the scheduling control unit 104 can determine a viability of a retiming option based on fuel usage associated with connecting flights for passengers. Fuel usage may be reduced by ensuring that a maximum number of passengers are able to make previously scheduled connecting flights. As another example, fuel usage may be reduced by re-scheduling one or more connecting passengers onto flights of different aircraft within a fleet of aircraft. As another example, lower fuel usage when a different aircraft model is assigned a flight number, or by assigning passengers different connections, and/or the like.

In at least one example, the scheduling control unit 104 is further in communication with a metric database 120 that stores data regarding one or more metrics for various tail assignments 112, changes in tail assignments 112, changes in flight connections, and the like. In such an example, the scheduling control unit 104 determines retiming options based on analysis of the one or more metrics, such as fuel usage reductions. Improved scheduling can be achieved based on increasing a number of passengers on particular connecting flights. Optionally, improved scheduling can be achieved based on re-scheduling one or more connecting passengers onto different aircraft having different tail assignments 112 within a particular fleet of aircraft.

In at least one other example, improved scheduling can be achieved by re-scheduling particular flights to one or more different aircraft 102 within a fleet. The different aircraft 102 can burn less fuel, thereby providing a reduction in fuel usage. As another example, re-scheduling different passengers on different tail assignments 112 can achieve reduced fuel usage, as such flight routes can be shorter, even if one or more additional connections are required.

After the scheduling control unit 104 determines the retiming options, the scheduling control unit 104 can output a signal to the user interface 108. The signal includes data having the retiming options. A user can then select a desired retiming option.

In at least one other example, the scheduling control unit 104 automatically selects (without human intervention) a retiming option. For example, the scheduling control unit 104 can automatically select a retiming option based on a greatest reduction in fuel usage to an airline. Additionally or alternatively, the scheduling control unit 104 can automatically select a retiming option based on the highest fraction of passengers that will arrive at their destinations on time or with a minimal overall delay. The improved scheduling may be determined based on how the retiming option affects various tail assignments 112 within a schedule. The improved scheduling can be achieved by reducing fuel usage of the various tail assignments 112, increasing a number of connecting passengers on particular tail assignment(s) 112, rescheduling connecting passengers to different tail assignments, and/or the like.

As can be appreciated, revising a tail assignment 112 for an aircraft 102 can have a cascading effect on the schedule 110 in relation to numerous other tail assignments 112. The schedule 110 can include thousands or more tail assignments 112, which can be affected by a retiming option. A human being would be incapable of efficiently and effectively considering how a retiming option affects such tail assignments 112 in an acceptable amount of time (such as a time period of the schedule 110).

In at least one example, in response to the schedule 110 being revised by the scheduling control unit 104, one or more of the aircraft 102 can be automatically operated based on the revised schedule 110. For example, when the scheduling control unit 104 selects one or more retiming options that alter an original schedule 110, the aircraft 102 can be automatically operated based thereon. In at least one example, the scheduling control unit 104 can take control of one or more of aircraft 102 based on a revised schedule. Optionally, the aircraft 102 are not automatically operated based on the revised schedule 110.

As described herein, the system 100 includes the scheduling control unit 104, which is configured to determine one or more retiming options for one or more tail assignments 112 of one or more aircraft 102 scheduled for flights according to an original schedule 110. The one or more retiming options include one or more retiming times (such as a retiming departure time from a departure airport and/or a retiming arrival time times at an arrival airport) that differ from one or more original times (departure and/or arrival times) of the one or more tail assignments 112 within the original schedule 110. In at least one example, the scheduling control unit 104 is further configured to automatically select the one or more retiming options and revise the original schedule 110 based on the one or more retiming options as selected.

Figure 2 illustrates a simplified block diagram of tail assignments 112a and 112b and retiming options, according to an example of the present disclosure. Each tail assignment 112a and 112b includes a tail number 114a and 114b (for example, JP 202 and JP 204) and a flight number 116a and 116b (for example, 1000 and 1001). Referring to Figures 1 and 2, the scheduling control unit 104 determines retiming options 115a, 115b, and 115c in relation to the tail assignment 112a, as well as retiming options 117a, 117b, and 117c in relation to the tail assignment 112b. The retiming options 115a, 115b, and 115c differ from one another, and the original tail assignment 112a. Similarly, the retiming options 117a, 117b, and 117c differ from one another, and the original tail assignment 112b. That is, each of the original tail assignments 112a, 112b, and the retiming options 115a, 115b, 115c, 117a, 117b, and 117c is at a different time (such as differing in increments of five to ten minutes). Each retiming option 115a, 115b, 115c, 117a, 117b, and 117c is a discretely retimed copy of an original tail assignment (such as the original tail assignment 112a or original tail assignment 112b) as set forth in an original schedule 110.

As shown, the original tail assignment 112a, as set forth in an original schedule 110, allows for connecting passengers of the original tail assignment 112a to make the original tail assignment 112b. However, such connecting passengers would not be able to make retiming option 117a. As such, the scheduling control unit 104 may discard the retiming option 117a as a possibility.

In at least one example, the retiming options are different times for a particular tail assignment. As another example, the scheduling control unit 104 can re-assign tail assignments if a conflict exists with a subsequent flight and/or connecting flights. For example, the scheduling control unit 104 may switch a particular flight number to a different aircraft 102 within a fleet that is available if a retiming option undesirably affects a subsequent flight of one or more of the aircraft 102.

The retiming options shown in Figure 2 are merely exemplary. The scheduling control unit 104 can generate less or more retiming options than shown.

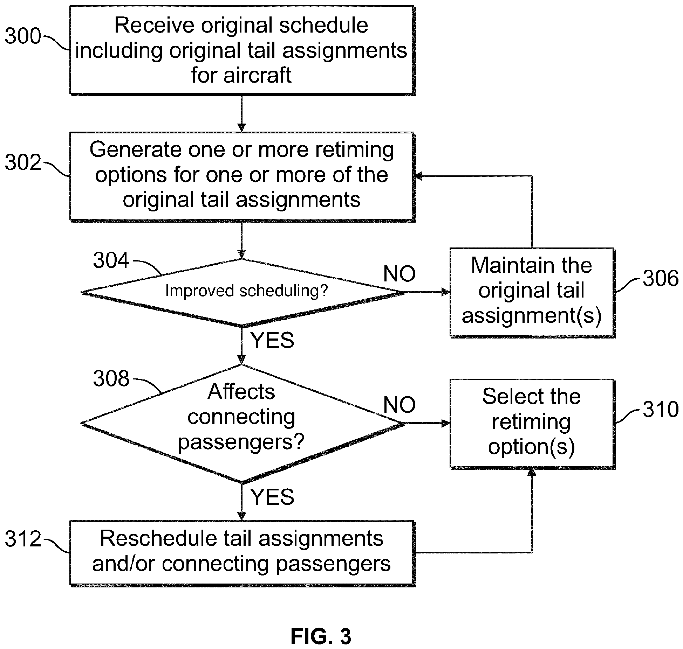

Figure 3 illustrates a flow chart of a method for scheduling flights of aircraft, according to an example of the present disclosure. Referring to Figures 1 and 3, at 300, the scheduling control unit 104 receives an original schedule 110, which includes the original tail assignments 112 for the aircraft 102. At 302, the scheduling control unit 104 generates one or more retiming options for one or more of the original tail assignments 112. At 304, the scheduling control unit 104 determines if the retiming option(s) leads to an improved scheduling of operating aircraft relative to the original schedule 110. If not, the method proceeds from 304 to 306, at which the scheduling control unit 104 maintains the original tail assignments 112, and the method returns to 302.

If, however, the retiming option(s) leads to an improved scheduling at 304 (in relation to the one or more metrics such as fuel usage, a desired number of passengers onboard subsequent flights, and/or the like), the method proceeds from 304 to 308, at which the scheduling control unit 104 determines how connecting passengers are affected. Optionally, in addition to, or instead of, determining how connecting passengers are affected, the method can include how fuel usage, operational considerations, and/or the like are affected. If at 308, the connecting passengers are not affected or acceptably affected in relation to a particular threshold (such as a certain amount of the connecting passengers being able to make connecting flight), the method proceed from 308 to 310, at which the scheduling control unit automatically selects the retiming option(s), thereby revising the original schedule 110.

If, however, the retiming option(s) connecting passengers are unacceptably affected (such as in relation to the particular threshold), the method proceeds from 308 to 312, at which the scheduling control unit 110 discards a retiming option, reschedules one or more tail assignments 112, and/or reschedules one or more connecting passengers. The method then proceeds from 312 to 310.

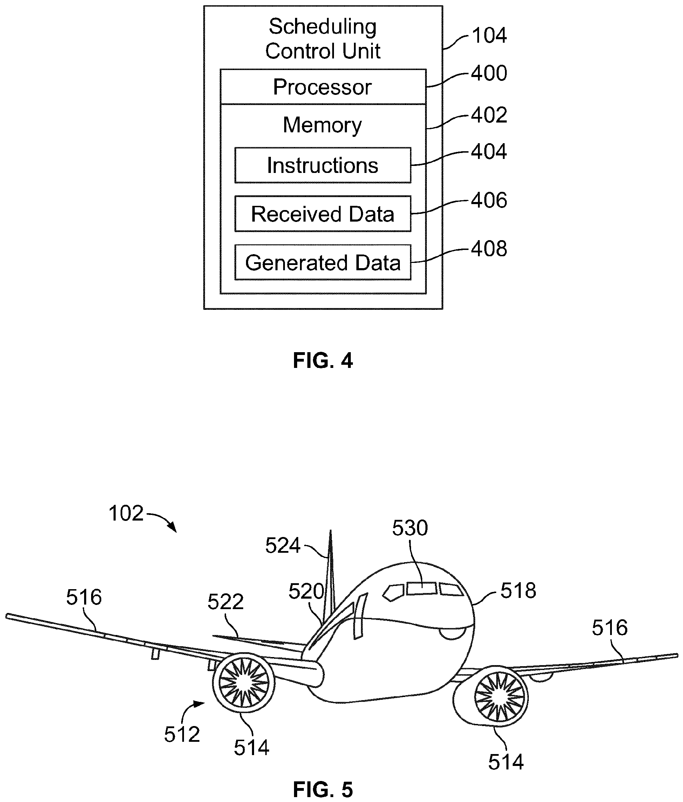

Figure 4 illustrates a schematic block diagram of the scheduling control unit 104, according to an example of the present disclosure. In at least one example, the scheduling control unit 104 includes at least one processor 400 in communication with a memory 402. The memory 402 stores instructions 404, received data 406, and generated data 408. The scheduling control unit 104 shown in Figure 4 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the scheduling control unit 104 may be or include one or more processors that are configured to control operation, as described herein.

The scheduling control unit 104 is configured to execute a set of instructions that are stored in one or more data storage units or elements (such as one or more memories), in order to process data. For example, the scheduling control unit 104 may include or be coupled to one or more memories. The data storage units may also store data or other information as desired or needed. The data storage units may be in the form of an information source or a physical memory element within a processing machine.

The set of instructions may include various commands that instruct the scheduling control unit 104 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the scheduling control unit 104. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the scheduling control unit 104 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include features of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to 1-4, examples of the subject disclosure provide systems and methods that allow large amounts of data to be quickly and efficiently analyzed by a computing device. For example, the scheduling control unit 104 can analyze hundreds, thousands, or more tail assignments 112 within a schedule 110, determine retiming options, and assess how such affect the numerous other tail assignments within the schedule 110 in real time. As such, large amounts of data are being tracked and analyzed. The vast amounts of data are efficiently organized and/or analyzed by the scheduling control unit 104, as described herein. The scheduling control unit 104 analyzes the data in a relatively short time in order to quickly and efficiently determine various scheduling options, and revise a schedule accordingly. As such, examples of the present disclosure provide increased and efficient functionality.

In at least one example, components of the system 100, such as the scheduling control unit 104, provide and/or enable a computer system to operate as a special computer system for determining various scheduling options and revising a schedule accordingly. The scheduling control unit 104 improves upon standard computing devices by analyzing retiming options, automatically selecting retiming options, and revising a schedule based on the selected retiming options.

In at least one example, all or part of the systems and methods described herein may be or otherwise include an artificial intelligence (AI) or machine-learning system that can automatically perform the operations of the methods also described herein. For example, the scheduling control unit 104 can be an artificial intelligence or machine learning system. These types of systems may be trained from outside information and/or self-trained to repeatedly improve the accuracy with how data is analyzed to determine retiming options and revising schedules. Over time, these systems can improve by determining retiming options and revising schedules with increasing accuracy and speed, thereby significantly reducing the likelihood of any potential errors. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve scheduling of tail assignments. The training minimizes conflicts and interference by performing an iterative training algorithm, in which the systems are retrained with an updated set of data (for example, data received in real time in relation to aircraft and schedules) and based on the feedback examined prior to the most recent training of the systems. This provides a robust analysis model that can better coordinate scheduling of tail assignments.

Figure 5 illustrates a perspective front view of an aircraft 102, according to an example of the present disclosure. The aircraft 102 includes a propulsion system 512 that includes engines 514, for example. Optionally, the propulsion system 512 may include more engines 514 than shown. The engines 514 are carried by wings 516 of the aircraft 102. In other examples, the engines 514 may be carried by a fuselage 518 and/or an empennage 520. The empennage 520 may also support horizontal stabilizers 522 and a vertical stabilizer 524. The fuselage 518 of the aircraft 102 defines an internal cabin 530, which includes a flight deck or cockpit, one or more work sections (for example, galleys, personnel carry-on baggage areas, and the like), one or more passenger sections (for example, first class, business class, and coach sections), one or more lavatories, and/or the like. Figure 5 shows an example of an aircraft 102. It is to be understood that the aircraft 102 can be sized, shaped, and configured differently than shown in Figure 5.

Further, the disclosure comprises examples according to the following clauses:
Clause 1. A system comprising: a scheduling control unit configured to determine one or more retiming options for one or more tail assignments of one or more aircraft scheduled for flights according to an original schedule, wherein the one or more retiming options include one or more retiming times that differ from one or more original times of the one or more tail assignments within the original schedule.
Clause 2. The system of Clause 1, wherein the scheduling control unit is further configured to select the one or more retiming options, and revise the original schedule based on the one or more retiming options as selected.
Clause 3. The system of Clause 2, wherein the scheduling control unit is configured to select the one or more retiming options based on one or more connecting flights of one or more connecting passengers.
Clause 4. The system of Clauses 2 or 3, wherein the scheduling control unit is configured to select the one or more retiming options based on a reduction in one or more metrics in relation to the original schedule and, optionally, wherein the one or more metrics include fuel usage.
Clause 5. The system of any of Clauses 1-4, further comprising a schedule database that stores the original schedule, wherein the scheduling control unit is in communication with the schedule database.
Clause 6. The system of any of Clauses 1-5, further comprising a user interface having a display, wherein the scheduling control unit is further configured to show one or more of the original schedule, the one or more retiming options, or a revised schedule based on the one or more retiming options on the display.
Clause 7. The system of any of Clauses 1-6, wherein the one or more tail assignments include one or more tail numbers associated with one or more flight numbers.
Clause 8. The system of any of Clauses 1-7, wherein the one or more retiming options comprise a plurality of retiming options.
Clause 9. The system of Clause 8, wherein the scheduling control unit is further configured to discard one or more of the plurality of retiming options that undesirably affect one or more subsequent flights.
Clause 10. The system of Clauses 8 or 9, wherein the scheduling control unit is further configured to assign a different aircraft to one or more of the plurality of retiming options in response to an original aircraft being unavailable for the one or more of the plurality of retiming options.
Clause 11. The system of any of Clauses 1-10, wherein the scheduling control unit is an artificial intelligence or machine learning system.
Clause 12. A method, optionally a computer-implemented method, comprising: determining, by a scheduling control unit, one or more retiming options for one or more tail assignments of one or more aircraft scheduled for flights according to an original schedule, wherein the one or more retiming options include one or more retiming times that differ from one or more original times of the one or more tail assignments within the original schedule.
Clause 13. The method of Clause 12, further comprising: selecting, by the scheduling control unit, the one or more retiming options; and revising the original schedule based on the one or more retiming options as selected.
Clause 14. The method of Clause 13, wherein said selecting comprises selecting the one or more retiming options based on one or more connecting flights of one or more connecting passengers.
Clause 15. The method of Clauses 13 or 14, wherein said selecting comprises selecting the one or more retiming options based on a reduction in one or more metrics in relation to the original schedule and, optionally, wherein the one or more metrics include fuel usage.
Clause 16. The method of any of Clauses 12-15, further comprising storing the original schedule in a schedule database that is in communication with the scheduling control unit.
Clause 17. The method of any of Clauses 12-16, further comprising showing, by the scheduling control unit, one or more of the original schedule, the one or more retiming options, or a revised schedule based on the one or more retiming options on a display of a user interface in communication with the scheduling control unit.
Clause 18. The method of any of Clauses 12-17, wherein the one or more tail assignments include one or more tail numbers associated with one or more flight numbers.
Clause 19. The method of any of Clauses 12-18, wherein the one or more retiming options comprise a plurality of retiming options, and further comprising one or both of: discarding, by the scheduling control unit, one or more of the plurality of retiming options that undesirably affect one or more subsequent flights; or assigning, by the scheduling control unit, a different aircraft to one or more of the plurality of retiming options in response to an original aircraft being unavailable for the one or more of the plurality of retiming options.
Clause 20. A non-transitory computer-readable storage medium comprising executable instructions that, in response to execution, cause one or more control units comprising a processor, to perform operations comprising: determining one or more retiming options for one or more tail assignments of one or more aircraft scheduled for flights according to an original schedule, wherein the one or more retiming options include one or more retiming times that differ from one or more original times of the one or more tail assignments within the original schedule; selecting the one or more retiming options; and revising the original schedule based on the one or more retiming options as selected.

As described herein, examples of the present disclosure systems and methods for revising a schedule of flight times of aircraft.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or features thereof) can be used in combination with each other. In addition, many modifications can be made to adapt a particular situation or material to the teachings of the various examples of the disclosure without departing from the scope of the claims. While the dimensions and types of materials described herein are intended to define features of the various examples of the disclosure, the examples are by no means limiting and are exemplary. Many other examples will be apparent to those of skill in the art upon reviewing the above description. The scope should be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope is defined by the claims, and can include examples other than those described herein that occur to those skilled in the art.

## Claims

1. A computer-implemented method comprising:
determining, by a scheduling control unit (104), one or more retiming options for one or more tail assignments (112) of one or more aircraft (102) scheduled for flights according to an original schedule (110), wherein the one or more retiming options include one or more retiming times that differ from one or more original times of the one or more tail assignments (112) within the original schedule (110).

2. The method of claim 1, further comprising:
selecting, by the scheduling control unit (104), the one or more retiming options; and
revising the original schedule (110) based on the one or more retiming options as selected.

3. The method of claim 2, wherein said selecting comprises selecting the one or more retiming options based on one or more connecting flights of one or more connecting passengers.

4. The method of claim 2 or 3, wherein said selecting comprises selecting the one or more retiming options based on a reduction in one or more metrics in relation to the original schedule (110) and, optionally, wherein the one or more metrics include fuel usage.

5. The method of any of claims 2 to 4, further comprising storing the original schedule (110) in a schedule database (106) that is in communication with the scheduling control unit (104).

6. The method of any of claims 1 to 5, further comprising showing, by the scheduling control unit (104), one or more of the original schedule (110), the one or more retiming options, or a revised schedule (110) based on the one or more retiming options, on a display (109) of a user interface (108) in communication with the scheduling control unit (104).

7. The method of any of claims 1 to 6, wherein the one or more tail assignments (112) include one or more tail numbers (114) associated with one or more flight numbers (116).

8. The method of any of claims 1 to 7, wherein the one or more retiming options comprise a plurality of retiming options, and further comprising one or both of:
discarding, by the scheduling control unit (104), one or more of the plurality of retiming options that undesirably affect one or more subsequent flights; or
assigning, by the scheduling control unit (104), a different aircraft (102) to one or more of the plurality of retiming options in response to an original aircraft (102) being unavailable for the one or more of the plurality of retiming options.

9. The method of any of claims 1 to 8, wherein the one or more retiming options comprise a plurality of retiming options.

10. The method of claim 9, comprising the scheduling control unit (104) discarding one or more of the plurality of retiming options that undesirably affect one or more subsequent flights.

11. The method of claim 9 or 10, comprising the scheduling control unit (104) assigning a different aircraft (102) to one or more of the plurality of retiming options in response to an original aircraft (102) being unavailable for the one or more of the plurality of retiming options.

12. The method of any of claims 1 to 11, wherein the scheduling control unit (104) is an artificial intelligence or machine learning system (100).

13. A computer program comprising computer program instructions that, when executed by one or more computer processors of a computer system, cause the computer system to perform the method of any of claims 1 to 12, or a computer readable storage medium having stored thereon such a computer program.

14. A computer system (100) comprising:
computer memory having stored thereon such a computer program comprising computer program instructions; and
a scheduling control unit (104) configured to execute the computer program instructions of the computer program; and
wherein the scheduling control unit (104) executing the computer program instructions causes the scheduling control unit (104) to perform the method of any of claims 1 to 12.

15. An aircraft comprising the computer system (100) of claim 14.
